(19) Europäisches Patentamt / European Patent Office / Office européen des brevets

(11) **EP 2 037 267 A2**

(12) **EUROPEAN PATENT APPLICATION**

(43) Date of publication:
**18.03.2009 Bulletin 2009/12**

(51) Int Cl.:
**G01N 33/00** (2006.01)

(21) Application number: **08015951.0**

(22) Date of filing: **10.09.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **11.09.2007 JP 2007235236**

(71) Applicant: **Yamaha Hatsudoki Kabushiki Kaisha Iwata-shi, Shizuoka 438-8501 (JP)**

(72) Inventor: **Kondo, Mitsuo**
**Iwata-shi**
**Shizuoka-ken 438-8501 (JP)**

(74) Representative: **Grünecker, Kinkeldey,**
**Stockmair & Schwanhäusser**
**Anwaltssozietät**
**Leopoldstrasse 4**
**80802 München (DE)**

(54) **Gas sensor, air- fuel ratio controller, and transportation apparatus**

(57)    A resistance-type gas sensor (10) includes a gas detection section (1) including an oxide semiconductor layer (3). The oxide semiconductor layer includes cerium ions and zirconium ions. An amount of substance of zirconium ions relative to a sum of amounts of substance of cerium ions and zirconium ions contained in the oxide semiconductor layer (3) is no less than 45% and no more than 60%, and the oxide semiconductor layer (3) has a crystal phase containing 80 vol% or more of cubic crystals.

FIG.1

**EP 2 037 267 A2**

**Description**

BACKGROUND OF THE INVENTION

1. Field of the Invention

The present invention relates to a gas sensor, and in particular to a resistance-type gas sensor having an oxide semiconductor layer. The present invention also relates to an air-fuel ratio controller and a transportation apparatus including such a gas sensor.

2. Description of the Related Art

From the standpoint of environmental and energy issues, improving the fuel consumption of internal combustion engines, and reducing the emission amount of regulated substances (e.g., $NO_x$) that are contained within the exhaust gas from internal combustion engines has been desirable. In order to meet these needs, it is necessary to appropriately control the ratio between fuel and air during combustion, so that fuel combustion will occur always under optimum conditions. The ratio of air to fuel is called an "air-fuel ratio" (A/F). When a ternary catalyst is employed, the optimum air-fuel ratio would be the stoichiometric air-fuel ratio. The "stoichiometric air-fuel ratio" is an air-fuel ratio at which air and fuel will just combust sufficiently.

When fuel is combusting at the stoichiometric air-fuel ratio, a certain amount of oxygen is contained within the exhaust gas. When the air-fuel ratio is smaller than the stoichiometric air-fuel ratio (i.e., the fuel concentration is relatively high), the oxygen amount in the exhaust gas is decreased relative to that under the stoichiometric air-fuel ratio. On the other hand, when the air-fuel ratio is greater than the stoichiometric air-fuel ratio (i.e., the fuel concentration is relatively low), the oxygen amount in the exhaust gas increases. Therefore, by measuring the oxygen amount (or oxygen concentration) in the exhaust gas, it is possible to estimate how much deviation there is between a present air-fuel ratio and the stoichiometric air-fuel ratio. This makes it possible to adjust the air-fuel ratio and control the fuel combustion so as to allow it to occur under the optimum conditions.

Resistance-type oxygen sensors as disclosed in Japanese Laid-Open Patent Publication No. 2003-149189 are known to be used as oxygen sensors for measuring the oxygen concentration in exhaust gas. A resistance-type oxygen sensor detects changes in the resistivity of an oxide semiconductor layer which is arranged so as to be in contact with the exhaust gas. When the oxygen partial pressure within the exhaust gas changes, the oxygen vacancy concentration in the oxide semiconductor layer fluctuates, thus causing a change in the resistivity of the oxide semiconductor layer. By detecting such a change in resistivity, the oxygen concentration can be measured.

As an oxide semiconductor to be used for a resistance-type oxygen sensor, ceria (cerium oxide) is considered to be promising in terms of durability and stability, as is also disclosed in Japanese Laid-Open Patent Publication No. 2003-149189. Alternatively, Japanese Patent No. 3870261 discloses a technique of improving the response characteristics of an oxygen sensor having an oxide semiconductor layer composed of an oxide which includes cerium ions and zirconium ions (i.e., a complex oxide of cerium and zirconium), where a rate of the amount of substance of zirconium ions relative to a sum of the amounts of substance of cerium ions and zirconium ions is prescribed to be 0.5% to 40%.

However, even when using the techniques disclosed in Japanese Laid-Open Patent Publication No. 2003-149189 and Japanese Patent No. 3870261, the oxide semiconductor layer will experience a large change in resistivity over time, which makes it difficult to obtain a practically sufficient durability. Moreover, even if the technique of Japanese Patent No. 3870261 is used for obtaining improved response characteristics, it is only possible to achieve a response time of about several seconds (as is also described in Japanese Patent No. 3870261), and thus sufficient response characteristics for an on-vehicle sensor cannot be obtained. Furthermore, the response time which is specifically described in Japanese Patent No. 3870261 is a response time in the case where the oxygen partial pressure changes within the lean region, as opposed to a response time in the case where the oxygen partial pressure changes between the rich region and the lean region. In other words, the composition disclosed in Japanese Patent No. 3870261 is not a composition that excels in rich-lean detection accuracy, and rich-lean detection accuracy is an important factor for on-vehicle sensors.

SUMMARY OF THE INVENTION

In order to overcome the problems described above, preferred embodiments of the present invention improve the durability and response characteristics of a resistance-type gas sensor having an oxide semiconductor layer which includes cerium ions and zirconium ions.

A gas sensor according to a preferred embodiment of the present invention is a resistance-type gas sensor including a gas detection section including an oxide semiconductor layer that includes cerium ions and zirconium ions.

An amount of substance of zirconium ions relative to a sum of the amounts of substance of cerium ions and zirconium ions included in the oxide semiconductor layer is preferably no less than 45% and no more than 60%, and the oxide semiconductor layer has a crystal phase containing 80 vol% or more of cubic crystals.

In a preferred embodiment, the oxide semiconductor layer contains no less than 0.01 wt% and no more than 10 wt% of Al.

In a preferred embodiment, the oxide semiconductor layer contains no less than 0.01 wt% and no more than 5 wt% of Si.

Alternatively, the gas sensor according to a preferred embodiment of the present invention is a resistance-type gas sensor including a gas detection section including an oxide semiconductor layer that includes cerium ions and zirconium ions; and the oxide semiconductor layer further contains no less than 0.01 wt% and no more than 10 wt% of Al and no less than 0.01 wt% and no more than 5 wt% of Si.

In a preferred embodiment, the gas sensor is an oxygen sensor.

An air-fuel ratio controller according to a preferred embodiment of the present invention includes a gas sensor having the aforementioned features and a control section connected to the gas sensor arranged to control an air-fuel ratio of an internal combustion engine.

A transportation apparatus according to a preferred embodiment of the present invention includes an air-fuel ratio controller having the aforementioned features.

A method of producing a gas sensor according to a preferred embodiment of the present invention includes a step of providing a solution including cerium ions and zirconium ions, a step of producing a ceria-zirconia powder containing no less than 45 mol% and no more than 60 mol% of zirconia from the solution, preferably by using a coprecipitation technique, and a step of forming the oxide semiconductor layer on the substrate with the ceria-zirconia powder.

In a gas sensor according to a preferred embodiment of the present invention, an amount of substance of zirconium ions relative to a sum of the amounts of substance of cerium ions and zirconium ions contained in the oxide semiconductor layer (which may hereinafter be simply referred to as a "zirconium ion ratio") is no less than 45% and no more than 60%, and the oxide semiconductor layer has a crystal phase containing 80 vol% or more of cubic crystals. Since the zirconium ion ratio is no less than 45% and no more than 60%, the response time of the gas sensor relative to changes in gas concentration is reduced, and the response characteristics are improved. Moreover, since grain growth of oxide semiconductor particles is suppressed, an improved heat resistance is obtained. Furthermore, since the oxygen partial pressure dependence of the resistivity of the oxide semiconductor layer is increased, an improved rich-lean detection accuracy is obtained. Since the crystal phase of the oxide semiconductor layer contains 80 vol% or more of cubic crystals, the response characteristics are improved and the change in resistivity over time is suppressed. Thus, a gas sensor according to the various preferred embodiments of the present invention is excellent in durability and response characteristics.

Preferably, the oxide semiconductor layer of a preferred embodiment of the present invention contains no less than 0.01 wt% and no more than 10 wt% of Al. When the Al content in the oxide semiconductor layer is no less than 0.01 wt% and no more than 10 wt%, adhesion between the substrate and the oxide semiconductor layer is improved, and peeling of the oxide semiconductor layer can be prevented. Moreover, the effect of suppressing grain growth of oxide semiconductor particles is enhanced, whereby the heat resistance is further improved. On the other hand, if the Al content is less than 0.01 wt%, the aforementioned effect of Al addition is hardly obtained. If the Al content exceeds 10 wt%, electrical conduction becomes more inhibited, thus resulting in an increased resistivity of the oxide semiconductor layer.

Preferably, the oxide semiconductor layer of a preferred embodiment of the present invention contains no less than 0.01 wt% and no more than 5 wt% of Si. When the Si content in the oxide semiconductor layer is no less than 0.01 wt% and no more than 5 wt%, adhesion between the substrate and the oxide semiconductor layer is improved, and peeling of the oxide semiconductor layer can be prevented. On the other hand, if the Si content is less than 0.01 wt%, the aforementioned effect of Si addition is hardly obtained. If the Si content exceeds 5 wt%, electrical conduction becomes more inhibited, thus resulting in an increased resistivity of the oxide semiconductor layer.

A gas sensor according to a preferred embodiment of the present invention is suitably used as an oxygen sensor for detecting oxygen concentration, and a gas sensor according to a preferred embodiment of the present invention is suitably used for an air-fuel ratio controller arranged to control the air-fuel ratio of an internal combustion engine. An air-fuel ratio controller incorporating the gas sensor according to a preferred embodiment of the present invention is suitably used for various types of transportation apparatuses.

A method of producing a resistance-type gas sensor according to a preferred embodiment of the present invention includes a step of producing a ceria-zirconia powder containing no less than 45 mol% and no more than 60 mol% of zirconia from a solution including cerium ions and zirconium ions, preferably by using coprecipitation technique. In other words, the method of producing a gas sensor preferably produces a ceria-zirconia powder by using coprecipitation technique. This makes it easy to obtain a uniform solid solution of ceria and zirconia, and it also sufficiently increases the cubic crystal ratio of the crystal phase of the oxide semiconductor layer. As a result, sufficient response characteristics are obtained, and change in resistivity over time can be sufficiently suppressed for long periods of time. A high mass-producibility is also obtained.

According to the preferred embodiments of the present invention, the durability and response characteristics of a resistance-type gas sensor having an oxide semiconductor layer which includes cerium ions and zirconium ions are improved.

Other features, elements, processes, steps, characteristics and advantages of the present invention will become more apparent from the following detailed description of preferred embodiments of the present invention with reference to the attached drawings.

BRIEF DESCRIPTION OF THE DRAWINGS

FIG. 1 is an exploded perspective view schematically showing an oxygen sensor according to a preferred embodiment of the present invention.

FIG. 2 is a cross-sectional view schematically showing an oxygen sensor according to a preferred embodiment of the present invention.

FIG. 3 is a diagram schematically showing an exemplary motorcycle including the oxygen sensor.

FIG. 4 is a diagram schematically showing a control system of an engine in the motorcycle shown in FIG. 3.

FIG. 5 is a flowchart showing an exemplary control flow for the oxygen sensor.

DETAILED DESCRIPTION OF PREFERRED EMBODIMENTS

Hereinafter, preferred embodiments of the present invention will be described with reference to the accompanying drawings. Note that, the present invention is not to be limited to the following preferred embodiments.

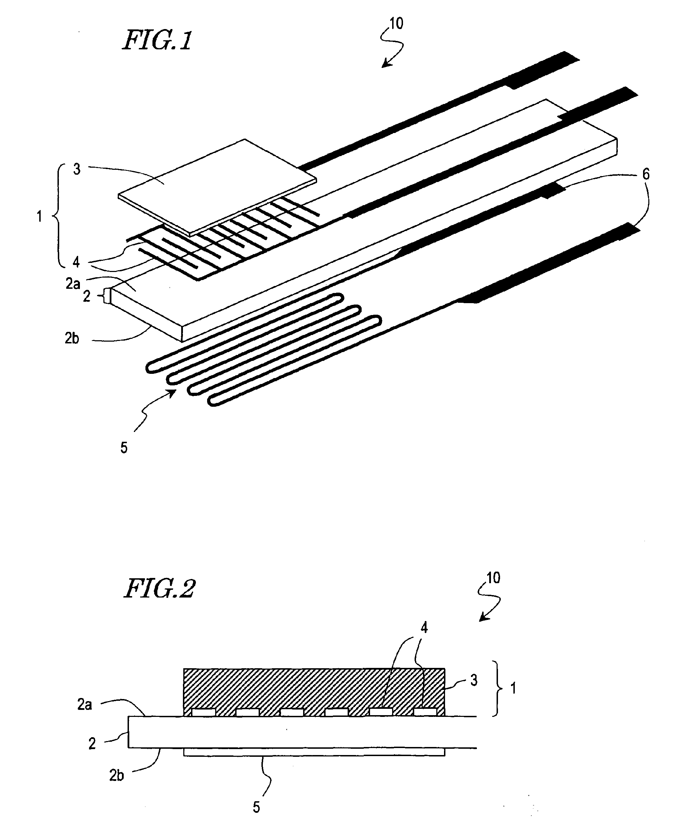

First, with reference to FIGS. 1 and 2, the structure of a resistance-type gas sensor 10 according to the present preferred embodiment will be described. FIGS. 1 and 2 are an exploded perspective view and a cross-sectional view, respectively, schematically showing the oxygen sensor 10.

As shown in FIGS. 1 and 2, the gas sensor 10 includes a gas detection section 1 arranged to detect a predetermined gas (for example, oxygen), and a substrate 2 supporting the gas detection section 1.

The gas detection section 1 includes an oxide semiconductor layer 3 whose resistivity changes in accordance with an oxygen partial pressure in the ambient gas, and electrodes 4 for detecting the resistivity of the oxide semiconductor layer 3. The oxide semiconductor layer 3 and the electrodes 4 are supported by the substrate 2. The substrate 2 is formed of an insulator such as alumina or magnesia. The substrate 2 has a principal surface 2a and a rear surface 2b opposing each other, such that the oxide semiconductor layer 3 and the electrodes 4 are disposed on the principal surface 2a.

The oxide semiconductor layer 3 preferably includes cerium ions and zirconium ions. That is, the oxide semiconductor layer 3 is a complex oxide including ceria (cerium oxide) and zirconia (zirconium oxide). The oxide semiconductor layer 3 has a porous structure including minute oxide semiconductor particles. The oxide semiconductor layer 3 releases or absorbs oxygen in accordance with the oxygen partial pressure in the atmosphere. This causes a change in the oxygen vacancy concentration in the oxide semiconductor layer 3, which in turn causes a change in the resistivity of the oxide semiconductor layer 3. By measuring this change in resistivity with the electrodes 4, the oxygen concentration can be detected. The oxide semiconductor particles typically have a particle size of 5 nm to 500 nm, whereas the oxide semiconductor layer 3 typically has a porosity of 5% to 50%, for example.

The electrodes 4 are made of an electrically conductive material, such as a metal material (e.g., platinum, platinum-rhodium alloy, or gold). Preferably, the electrodes 4 are arranged in a comb teeth or interdigitated arrangement so as to be able to efficiently measure changes in the resistivity of the oxide semiconductor layer 3.

Although not illustrated in the figures, a catalyst layer is preferably provided on the gas detection section 1. The catalyst layer preferably includes a catalytic metal. Due to the catalytic action of the catalytic metal, at least one kind of substance other than the gas to be detected (i.e., oxygen) is decomposed. Specifically, any gas or microparticles (e.g., the hydrocarbon which has failed to completely combust, carbon, and nitrogen oxide) which may unfavorably affect the oxygen detection by the gas detection section 1 will be decomposed, thereby preventing such gas or microparticles from attaching to the surface of the gas detection section 1. As a catalytic metal, platinum, for example, may be used.

On the rear surface 2b side of the substrate 2, a heater 5 for elevating the temperature of the gas detection section 1 is provided. In the present preferred embodiment, the heater 5 is a resistance heating type heating device, which performs heating by utilizing resistance loss. When a voltage is applied to electrodes 6 which extend from the heater 5, an electric current flows in the heating element that is formed in a predetermined shape, whereby the heating element generates heat. The heat is conducted to the gas detection section 1 via the substrate 2. By elevating the temperature of the gas detection section 1 with the heater 5 to promptly activate the oxide semiconductor layer 3, the detection accuracy when the internal combustion engine is started can be improved.

The oxygen sensor 10 of the present preferred embodiment is characterized by the ratio of zirconium ions present in the oxide semiconductor layer 3 and by the crystal phase (crystal structure) of the oxide semiconductor layer 3. Hereinafter, these will be more specifically described.

In the present preferred embodiment, an amount of substance of zirconium ions (mole number) relative to a sum of the amounts of substance of cerium ions and zirconium ions (sum of their mole numbers) contained in the oxide semiconductor layer 3 (hereinafter simply referred to as "zirconium ion ratio") preferably is no less than 45% and no more than 60%, and the oxide semiconductor layer 3 has a crystal phase (crystal structure) containing 80 vol% or more of cubic crystals. Since the oxide semiconductor layer 3 has such a construction, the durability and response characteristics of the oxygen sensor 10 can be improved as described below.

Firstly, when the zirconium ion ratio (which is also an amount of substance of zirconia relative to a sum of the amounts of substance of ceria and zirconia) is no less than 45% and no more than 60%, the response time (or more specifically, the response time in the case where the oxygen partial pressure changes between the rich region and the lean region) becomes short, whereby the response characteristics are improved. Moreover, the grain growth of the oxide semiconductor particles when exposed to a high temperature is suppressed, whereby the heat resistance is improved. Furthermore, since the difference (gap) in resistivity between the rich region and the lean region is increased (i.e., the oxygen partial pressure dependence of resistivity is increased), the rich-lean detection accuracy is improved. The reason why the grain growth of oxide semiconductor particles is suppressed can be explained as follows. When the cerium ion ratio is high, a strong coagulation tends to occur between particles, so that grain growth is likely to occur with heat. On the other hand, when the cerium ion ratio is low, there is a tendency toward weak coagulation and uniform dispersion, so that grain growth is unlikely to occur. By prescribing the cerium ion ratio to 55% or less, i.e., by prescribing the zirconium ion ratio to 45% or more, the grain growth is sufficiently suppressed. Moreover, the zirconium ions being present with a ratio of 45% or more serve as a hindrance to grain growth, whereby grain growth is also suppressed.

Moreover, the crystal phase of the oxide semiconductor layer 3, which includes zirconium ions in addition to cerium ions, not only includes cubic crystals but also tetragonal crystals. As the ratio of cubic crystals increases, the response characteristics are improved and the change in resistivity over time is more suppressed. Specifically, when the crystal phase of the oxide semiconductor layer 3 contains 80 vol% or more of cubic crystals, the improvement in the response characteristics and suppression of the change in resistivity over time become outstanding.

The oxygen sensor 10 of the present preferred embodiment preferably has a zirconium ion ratio of no less than 45% and no more than 60%, and has a crystal phase containing 80 vol% or more of cubic crystals, and therefore is excellent in durability and response characteristics.

Now, results of actually prototyping the oxygen sensors 10 of the present preferred embodiment with various zirconium ion ratios and evaluating their durability and response characteristics will be described. Table 1 shows a relationship between the resistivity and response time and the zirconium ion ratio.

Note that the oxide semiconductor layer 3 was prepared by applying a paste obtained by mixing a ceria/zirconia powder with a vehicle (where the ceria/zirconia powder content was 10 wt%) on the substrate 2 of alumina and subjecting it to baking, while varying the zirconium ion ratio by adjusting the zirconia content in the ceria-zirconia powder. For example, when a powder having 45 mol% zirconia content was used, the zirconium ion ratio of the oxide semiconductor layer 3 would be 45%. The oxide semiconductor layer 3 was prepared so as to have a thickness of 20 μm after baking. The oxide semiconductor particles contained in the oxide semiconductor layer 3 had a particle size of 100 nm, and the oxide semiconductor layer 3 had a porosity of 10%. The ceria-zirconia powder was produced by a coprecipitation technique which is described later.

As resistivity, volume resistivity at 700°C (Ω·m) is shown. By using resistance R, thickness t of the oxide semiconductor layer 3, length of opposing electrodes (electrode length) w, and distance d between the electrodes, the volume resistivity VR is expressed by the following equation:

$$VR=(R \cdot t \cdot w)/d$$

For measurement of the resistance R, a model gas analyzer manufactured by HORIBA, Ltd. was used; the temperature of the oxygen sensor 10 (i.e., the temperature within a furnace accommodating the oxygen sensor 10) was set to 700°C; and the resistivities when A/F(air-fuel ratio)=12 and when A/F=16 were measured. The thickness t of the oxide semiconductor layer 3, electrode length w and distance d between electrodes were measured by using an ultra-deep profile microscope VK-8550 manufactured by KEYENCE CORPORATION.

As for the measurement of response time (ms), a 250cc single-cylinder engine was used, and the time until the resistivity became tenfold (i.e., the resistivity increased to 1000% of the original resistivity) after the amount of fuel injection was varied so that A/F changed from 12 to 16 (i.e., from a rich state with a low oxygen concentration to a lean state with a high oxygen concentration) is shown as "response time" in Table 1. Conversely, when A/F was allowed to change from 16 to 12 (i.e., from a lean state with a high oxygen concentration to a rich state with a low oxygen concentration), the time until the resistivity became 1/10 (i.e., the resistivity decreased to 10% of the original resistivity) is shown as "response time".

Table 1

|  | zirconium ion ratio | volume resistivity at 700°C (Ω·m) | | response time at 700°C (ms) | |
|---|---|---|---|---|---|
|  |  | A/F=12 | A/F=16 | A/F=12→16 | A/F=16→12 |
| Comparative Example 1 | 20% | 0.60 | 60 | 200 | 70 |
| Comparative Example 2 | 40% | 1.20 | 270 | 130 | 60 |
| Example 1 | 45% | 1.25 | 280 | 80 | 50 |
| Example 2 | 50% | 1.30 | 300 | 70 | 40 |
| Example 3 | 60% | 1.60 | 350 | 70 | 50 |
| Comparative Example 3 | 70% | 3.00 | 800 | 120 | 60 |

As shown in Table 1, in the case when the zirconium ion ratio is 45%, 50%, or 60% (Example 1, 2, or 3), there is a large difference between the volume resistivity when A/F=12 and the volume resistivity when A/F=16, and the resistivity gap between the rich region and the lean region is large. Specifically, there is a gap of 200 times or more. On the other hand, in the case where the zirconium ion ratio is 20% (Comparative Example 1), there is a small difference between the volume resistivity when A/F=12 and the volume resistivity when A/F=16, and the resistivity gap between the rich region and the lean region is small. Specifically, the gap is about 100 times. In the case where the zirconium ion ratio is 70% (Comparative Example 3), the resistivity gap itself is large, but the resistivity is too high, thus hindering detection.

Moreover, as shown in Table 1, in the case where the zirconium ion ratio is 45%, 50%, or 60% (Example 1, 2, or 3), the response time is shorter than in the case where the zirconium ion ratio is 20%, 40%, or 70% (Comparative Example 1, 2, or 3). Specifically, the response time when A/F is changed from 12 to 16 is 100 ms or less in Examples 1, 2, and 3, but is greater than 100 ms in Comparative Examples 1, 2, and 3. Furthermore, the response time when A/F is changed from 16 to 12 is 50 ms or less in Examples 1, 2, and 3, but is greater than 50 ms in Comparative Examples 1, 2, and 3. Thus, Examples 1, 2, and 3 have shorter response times than those of Comparative Examples 1, 2, and 3, and exhibit clearly distinct response times especially when A/F is changed from 12 to 16 (i.e., when switching from a low oxygen concentration state to a high oxygen concentration state).

Next, Table 2 shows a relationship between the change in resistivity over time and the zirconium ion ratio. Table 2 shows transitions in resistivity when a heat treatment at 1000°C is performed to accelerate the change over time (resistivities at the following points: initial, 100 hours later, 500 hours later, 1000 hours later, and 5000 hours later), where the resistivities are shown in relative values, the initial resistivity being one. A model gas analyzer manufactured by HORIBA, Ltd. was used for the resistivity measurements. An electric furnace was used for the heat treatment, such that the temperature within a furnace was maintained at 1000°C for each predetermined duration in the air atmosphere.

Table 2

|  | zirconium ion ratio | change in resistivity through heat treatment at 1000°C | | | | |
|---|---|---|---|---|---|---|
|  |  | 0 h (initial) | 100 h later | 500 h later | 1000 h later | 5000 h later |
| Comparative Example 1 | 20% | 1 | 0.84 | 0.84 | 0.80 | 0.75 |
| Comparative Example 2 | 40% | 1 | 0.85 | 0.85 | 0.83 | 0.82 |
| Example 1 | 45% | 1 | 0.95 | 0.95 | 0.94 | 0.96 |
| Example 2 | 50% | 1 | 0.99 | 1.01 | 1.02 | 1.01 |
| Example 3 | 60% | 1 | 1.02 | 1.02 | 1.01 | 1.01 |
| Comparative Example 3 | 70% | 1 | 1.02 | 1.02 | 1.03 | 1.02 |

As shown in Table 2, when the zirconium ion ratio is 45%, 50%, or 60% (Example 1, 2, or 3), the change in resistivity is 5% or less even 5000 hours later. On the other hand, when the zirconium ion ratio is 20% or 40% (Comparative Example 1 or 2), the resistivity is changed by 10% or more already at 100 hours later. When the zirconium ion ratio is 70% (Comparative Example 3), the change in resistivity over time is small, but as shown in Table 1, the resistivity may be too high or the response time may be too long, which is inappropriate for an oxide semiconductor layer to be used for an oxygen sensor.

As described above, since the zirconium ion ratio is no less than 45% and no more than 60%, the response characteristics are improved, whereby the rich-lean detection accuracy is improved. The change in resistivity over time is also suppressed. However, the above effects cannot be obtained by merely prescribing the zirconium ion ratio to be in the aforementioned range.

In the examples shown in Table 1 and Table 2, excellent effects are obtained in the range where the zirconium ion ratio is no less than 45% and no more than 60% because the oxide semiconductor layer 3 is formed so as to contain 80 vol% or more of cubic crystals. In the oxide semiconductor layer 3 which includes not only cerium ions but also zirconium ions, in order to achieve a crystal phase containing 80 vol% or more of cubic crystals, the oxide semiconductor layer 3 may be formed by using a ceria-zirconia powder which is produced by coprecipitation technique, for example. The coprecipitation technique is a technique of producing powder by utilizing a phenomenon that a plurality of kinds of sparingly soluble salts simultaneously precipitate in a supersaturated state which is achieved by adding an alkali to a solution containing two or more kinds of metal ions. Examples 1 to 3 and Comparative Examples 1 to 3 shown in Table 1 and Table 2 are both based on coprecipitation technique. As will be described later, a highly uniform powder is obtained by using the coprecipitation technique, which makes it possible to increase the cubic crystal ratio.

On the other hand, Japanese Patent No. 3870261 discloses, in the Example, an oxide semiconductor layer which is formed by using a powder that is produced by a spray pyrolysis technique. The spray pyrolysis technique is a technique which involves spraying a metal salt solution into a high temperature furnace to cause an instantaneous pyrolysis, whereby a metal oxide powder is produced. However, when using a powder which is produced by spray pyrolysis technique, it is difficult to attain a zirconium ion ratio of no less than 45% and no more than 60% and also a cubic crystal ratio of 80 vol% or more. This is the reason why the oxygen sensor disclosed in Japanese Patent No. 3870261 has inferior durability and response characteristics.

Table 3 shows a ratio of cubic crystals in the crystal phase (vol%), with respect to the case where the coprecipitation technique was used to produce the powder and the case where the spray pyrolysis technique was used to produce the powder. In the examples where the coprecipitation technique was used (Examples 1 to 3 and Comparative Examples 1 to 3), the powder was produced through the following procedure. First, an aqueous solution of cerium nitrate and an aqueous solution of basic zirconium sulfate were mixed to a predetermined concentration. Next, an aqueous solution of 25 wt% sodium oxide was added so that the mixed solution had a pH of 13, thus obtaining a precipitate. Thereafter, the resultant precipitate was separated into solid and liquid phases and recovered, and the solid was subjected to 3 hours of baking at 700°C in the atmosphere, whereby a ceria-zirconia powder was obtained. Moreover, in the examples where the spray pyrolysis technique was used (Comparative Examples 4 to 9), an aqueous solution of cerium nitrate and an aqueous solution of zirconium oxynitrate were mixed to a predetermined concentration, and this mixed aqueous solution was sprayed in droplets into a high temperature furnace at 700°C to cause pyrolysis, thus obtaining a ceria-zirconia powder.

Both in the examples where the coprecipitation technique was used and in the examples where the spray pyrolysis technique was used, a paste obtained by mixing 10 wt% of the resultant powder and 90 wt% of an organic solvent vehicle was printed on an alumina substrate (which was complete with electrodes whose main component was platinum) by a screen printing technique, then heated at 500°C in the atmosphere, and thereafter baked at 1000°C in the atmosphere, whereby a thick oxide semiconductor layer was formed. An X-ray diffraction pattern of this oxide semiconductor layer was measured by using an X-ray diffractometer RINT2000 manufactured by RIGAKU, thus determining the ratio of cubic crystals in the crystal phase. Specifically, the peak angles and peak intensities of the (111) plane of cubic crystals and the (111) plane of tetragonal crystals were determined from the measured data, and the ratio of cubic crystals was calculated from their intensity ratio (=peak intensity of tetragonal crystals/peak intensity of cubic crystals).

Table 3

| | zirconium ion ratio | powder producing method | cubic crystal (111) | tetragonal crystal (111) | cubic crystal ratio |
|---|---|---|---|---|---|
| | | | angle ($2\theta$/°) | angle ($2\theta$/°) | |
| Comp.Ex.1 | 20% | coprecipitation technique | 28.6 | - | 100 vol% |
| Comp.Ex.2 | 40% | | 28.7 | 29.9 | 92 vol% |
| Example 1 | 45% | | 29.1 | 29.9 | 95 vol% |
| Example 2 | 50% | | 29.3 | 29.9 | 93 vol% |
| Example 3 | 60% | | 29.5 | 29.9 | 91 vol% |
| Comp.Ex.3 | 70% | | 29.7 | 29.9 | 93 vol% |
| Comp.Ex.4 | 20% | spray pyrolysis technique | 28.7 | - | 100 vol% |
| Comp.Ex.5 | 40% | | 28.9 | 29.9 | 80 vol% |
| Comp.Ex.6 | 45% | | 28.9 | 29.9 | 70 vol% |
| Comp.Ex.7 | 50% | | 28.9 | 29.9 | 57 vol% |
| Comp.Ex.8 | 60% | | 28.9 | 29.9 | 46 vol% |
| Comp.Ex.9 | 70% | | 28.9 | 29.9 | 35 vol% |

From Table 3, it can be seen that the ratio of cubic crystals can be made higher in the case where the coprecipitation technique is used (Examples 1 to 3 and Comparative Examples 1 to 3) than in the case where the spray pyrolysis technique is used (Comparative Examples 4 to 9). In particular, when the spray pyrolysis technique is used, the ratio of tetragonal crystals increases as the zirconium ion ratio increases, so that the ratio of cubic crystals is greatly reduced. On the other hand, when the coprecipitation technique is used, the ratio of tetragonal crystals does not increase much even if the zirconium ion ratio increases, and the ratio of cubic crystals remains high (e.g., 90 vol% or more in the examples shown in Table 3).

Table 4 shows a relationship between the resistivity and response time and the zirconium ion ratio, with respect to Examples 1 to 3 and Comparative Examples 1 to 3, in which the coprecipitation technique was used, and Comparative Examples 4 to 9, in which the spray pyrolysis technique was used. The data shown with respect to Examples 1 to 3 and Comparative Examples 1 to 3 are the same as those shown in Table 1.

Table 4

| | zirconium ion ratio | powder producing method | volume resistivity at 700°C ($\Omega \cdot m$) | | response time at 700°C (ms) | |
|---|---|---|---|---|---|---|
| | | | A/F= 12 | A/F= 16 | A/F= 12→16 | A/F= 16→12 |
| Comp.Ex.1 | 20% | coprecipitation technique | 0.60 | 60 | 200 | 70 |
| Comp.Ex.2 | 40% | | 1.20 | 270 | 130 | 60 |
| Example 1 | 45% | | 1.25 | 280 | 80 | 50 |
| Example 2 | 50% | | 1.30 | 300 | 70 | 40 |
| Example 3 | 60% | | 1.60 | 350 | 70 | 50 |
| Comp.Ex.3 | 70% | | 2.40 | 500 | 120 | 60 |
| Comp.Ex.4 | 20% | spray pyrolysis technique | 0.60 | 60 | 200 | 70 |
| Comp.Ex.5 | 40% | | 1.60 | 340 | 240 | 80 |
| Comp.Ex.6 | 45% | | 1.80 | 410 | 250 | 80 |
| Comp.Ex.7 | 50% | | 2.40 | 520 | 270 | 80 |
| Comp.Ex.8 | 60% | | 2.90 | 650 | 270 | 80 |
| Comp.Ex.9 | 70% | | 3.20 | 800 | 280 | 80 |

From Table 4, it can be seen that, when the spray pyrolysis technique is used, the cubic crystal ratio is low so that the response time may be long or the resistivity may be too high. In particular, a comparison between Examples 1 to 3 and Comparative Examples 6 to 8 shows that, when the cubic crystal ratio is low (specifically, less than 80 vol%), sufficient response characteristics cannot be obtained and the resistivity is high even if the zirconium ion ratio is no less than 45% and no more than 60%.

Moreover, Table 5 shows a relationship between the change in resistivity over time and the zirconium ion ratio, with respect to Examples 1 to 3 and Comparative Examples 1 to 3, in which the coprecipitation technique was used, and Comparative Examples 4 to 9, in which the spray pyrolysis technique was used. The data shown with respect to Examples 1 to 3 and Comparative Examples 1 to 3 are the same as those shown in Table 1.

Table 5

| | zirconium ion ratio | powder producing method | change in resistivity through heat treatment at 1000°C | | | | |
|---|---|---|---|---|---|---|---|
| | | | 0 h (initial) | 100 h later | 500 h later | 1000 h later | 5000 h later |
| Comp.Ex. 1 | 20% | coprecipitation technique | 1 | 0.84 | 0.84 | 0.80 | 0.75 |
| Comp.Ex. 2 | 40% | | 1 | 0.85 | 0.85 | 0.83 | 0.82 |
| Example 1 | 45% | | 1 | 0.95 | 0.95 | 0.94 | 0.96 |
| Example 2 | 50% | | 1 | 0.99 | 1.01 | 1.02 | 1.01 |
| Example 3 | 60% | | 1 | 1.02 | 1.02 | 1.01 | 1.01 |
| Comp.Ex. 3 | 70% | | 1 | 1.02 | 1.02 | 1.03 | 1.02 |
| Comp.Ex. 4 | 20% | spray pyrolysis technique | 1 | 0.84 | 0.90 | 0.80 | 0.80 |
| Comp.Ex. 5 | 40% | | 1 | 1.06 | 1.10 | 1.40 | 1.30 |
| Comp.Ex. 6 | 45% | | 1 | 1.03 | 1.20 | 1.30 | 1.20 |
| Comp.Ex. 7 | 50% | | 1 | 1.04 | 1.30 | 1.50 | 1.40 |
| Comp.Ex. 8 | 60% | | 1 | 1.04 | 1.20 | 1.50 | 1.30 |
| Comp.Ex. 9 | 70% | | 1 | 1.30 | 1.50 | 2.10 | 3.30 |

From Table 5, it can be seen that, when the spray pyrolysis technique is used, change in resistivity over time is not suppressed because the cubic crystal ratio is low. In particular, a comparison between Examples 1 to 3 and Comparative Examples 6 to 8 shows that, when the cubic crystal ratio is low (specifically, less than 80 vol%), the effect of suppressing the change in resistivity over time cannot be sufficiently obtained even if the zirconium ion ratio is no less than 45% and no more than 60%.

Note that the reason why the cubic crystal ratio becomes low when the spray pyrolysis technique is used, such that sufficient response characteristics cannot be obtained and change in resistivity over time cannot be sufficiently suppressed, is because the use of the spray pyrolysis technique makes it difficult to obtain a uniform solid solution of ceria and zirconia, and allows large particle diameters to occur. Use of the spray pyrolysis technique also results in the problem of low mass-producibility.

On the other hand, according to the coprecipitation technique, a plurality of kinds of sparingly soluble salts are allowed to simultaneously precipitate from a solution containing two or more kinds of metal ions, and therefore a highly uniform powder is obtained. Therefore, it is easy to obtain a uniform solid solution of ceria and zirconia, and the particle diameters can be kept small. As a result, the cubic crystal ratio is increased and sufficient response characteristics are obtained, and the change in resistivity over time can be sufficiently suppressed. Use of the coprecipitation technique also provides for a high mass-producibility.

The oxygen sensor 10 of the present preferred embodiment can be produced as follows, for example.

First, the substrate 2 is provided. The substrate 2 has an insulative surface, and preferably has a heat resistance such that it experiences substantially no deformation or the like at the temperature of a heat treatment which is performed in the following process or at the temperature at which the oxygen sensor 10 is to be used. A ceramic material such as alumina or magnesia can be suitably used as the material of the substrate 2.

Next, the electrodes 4 are formed on the principal surface 2a of the substrate 2. The electrodes 4 are made of a material (e.g., platinum) which is electrically conductive and which has a heat resistance similar to that of the substrate 2. As a method for forming the electrodes 4, a screen printing technique can be used, for example.

Next, the oxide semiconductor layer 3 is formed so as to cover the electrodes 4. Specifically, a ceria-zirconia powder is provided first. For example, a solution including cerium ions and zirconium ions is provided, and by using a coprecipitation technique, a ceria-zirconia powder containing no less than 45 mol% and no more than 60 mol% of zirconia is produced from this solution. Next, the oxide semiconductor layer 3 is formed on the substrate 2 by using this ceria-zirconia powder. For example, a paste obtained by mixing the ceria-zirconia powder and an organic solvent vehicle may be applied on the principal surface 2a of the substrate 2 so as to cover the electrodes 4, and thereafter subjected to baking, thus forming the oxide semiconductor layer 3.

In addition to forming the electrodes 4 and the oxide semiconductor layer 3 on the principal surface 2a of the substrate 2 as described above, the heater 5 is formed on the rear surface 2b of the substrate 2. A metal material such as platinum or tungsten can also be used as the material of the heater 5. Moreover, a nonmetal material can also be used (e.g., an oxide conductor such as rhenium oxide). As a method for forming the heater 5, a screen printing technique is suitably used. The oxygen sensor 10 can be produced in the above-described manner.

Next, another preferable construction for the oxygen sensor 10 will be described.

From the standpoint of improving the durability and response characteristics of the oxygen sensor 10, it is preferable that the oxide semiconductor layer 3 has a cubic crystal ratio of 90 vol% or more. However, in the case where the zirconium ion ratio is 45% or more, depending on the production method, it may be difficult to ensure a cubic crystal ratio exceeding 95 vol%. Therefore, for ease of manufacture by using a high mass-producibility production method (e.g., coprecipitation technique), it may be said that the cubic crystal ratio is preferably 95 vol% or less.

Moreover, it is preferable that the oxide semiconductor layer 3 contains no less than 0.01 wt% and no more than 10 wt% of Al (which exists in the form of alumina within the oxide semiconductor layer 3). When the Al content in the oxide semiconductor layer 3 is no less than 0.01 wt% and no more than 10 wt%, adhesion between the substrate 2 and the oxide semiconductor layer 3 is improved, and a peeling of the oxide semiconductor layer 3 can be prevented. Moreover, the effect of suppressing grain growth of the oxide semiconductor particles is enhanced, thereby further improving the heat resistance. On the other hand, if the Al content is less than 0.01 wt%, the aforementioned effect of Al addition is hardly obtained. Moreover, if the Al content exceeds 10 wt%, electrical conduction becomes more inhibited, thus resulting in an increased resistivity of the oxide semiconductor layer 3.

In order to allow the oxide semiconductor layer 3 to contain a predetermined ratio of Al, Al may be added in the material of the oxide semiconductor layer 3, or an Al-containing material (e.g., alumina) may be used as the material of the substrate 2, and Al may be allowed to diffuse into the oxide semiconductor layer 3 from the substrate 2 during the process of forming the oxide semiconductor layer 3.

Moreover, it is preferable that the oxide semiconductor layer 3 contains no less than 0.01 wt% and no more than 5 wt% of Si (which exists in the form of silica within the oxide semiconductor layer 3). When the Si content in the oxide semiconductor layer 3 is no less than 0.01 wt% and no more than 5 wt%, adhesion between the substrate 2 and the oxide semiconductor layer 3 is improved, and peeling of the oxide semiconductor layer 3 can be prevented. If the Si content is less than 0.01 wt%, the aforementioned effect of Si addition is hardly obtained. On the other hand, if the Si content exceeds 5 wt%, electrical conduction becomes more inhibited, thus resulting in an increased resistivity of the oxide semiconductor layer 3.

In order to allow a predetermined ratio of Si to be contained in the oxide semiconductor layer 3, Si may be added in the material of the oxide semiconductor layer 3, or an Si-containing material may be used as the material of the substrate 2, and Si may be allowed to diffuse into the oxide semiconductor layer 3 from the substrate 2 during the process of forming the oxide semiconductor layer 3.

Now, results of evaluating the resistance to peeling of the oxide semiconductor layer 3 (i.e., degree of adhesion with the substrate 2) will be described, where the Al content and the Si content in the oxide semiconductor layer 3 were varied. Table 6 shows a relationship between the Al content and Si content and the persistence of the oxide semiconductor layer 3 in a peeling test with respect to Examples 4 to 23, in which the zirconium ion ratio was 45%. Table 7 shows a similar relationship with respect to Examples 24 to 43, in which the zirconium ion ratio was 60%. Note that the peeling test involved attaching a piece of Scotch tape (registered trademark) to the oxide semiconductor layer 3 and then peeling it. The weight of the oxide semiconductor layer 3 before the test and the weight of the oxide semiconductor layer 3 after the test were measured, and persistence was calculated according to the following equation.

persistence (%)=(weight after test/weight before test)

×100

Table 6

|  | zirconium ion ratio | Al percentage content (wt%) | Si percentage content (wt%) | volume resistivity at 700°C (Ω·m) | | oxide semiconductor layer persistence (%) | |
|---|---|---|---|---|---|---|---|
|  |  |  |  | A/F= 12 | A/F= 16 | 0 h (initial) | 1000°C - 1000 h later |
| Ex.4 |  | 0 | 0 | 1.12 | 280 | 70 | 40 |
| Ex.5 |  | 0.01 | 0 | 1.23 | 280 | 95 | 90 |
| Ex.6 |  | 1 | 0 | 1.28 | 300 | 100 | 100 |
| Ex.7 |  | 3 | 0 | 1.41 | 320 | 100 | 100 |
| Ex.8 |  | 5 | 0 | 1.47 | 330 | 100 | 100 |
| Ex.9 |  | 10 | 0 | 1.52 | 350 | 100 | 100 |
| Ex.10 |  | 15 | 0 | 2.35 | 430 | 100 | 100 |
| Ex.11 |  | 0 | 0.01 | 1.25 | 280 | 95 | 95 |
| Ex.12 |  | 0 | 1 | 1.31 | 330 | 100 | 100 |
| Ex.13 | 45% | 0 | 3 | 1.35 | 350 | 100 | 100 |
| Ex.14 |  | 0 | 5 | 1.54 | 380 | 100 | 100 |
| Ex.15 |  | 0 | 8 | 2.26 | 480 | 100 | 100 |
| Ex.16 |  | 0.01 | 0.01 | 1.25 | 280 | 95 | 95 |
| Ex.17 |  | 1 | 1 | 1.33 | 350 | 100 | 100 |
| Ex.18 |  | 3 | 3 | 1.45 | 370 | 100 | 100 |
| Ex.19 |  | 5 | 5 | 1.52 | 380 | 100 | 100 |
| Ex.20 |  | 10 | 5 | 1.65 | 400 | 100 | 100 |
| Ex.21 |  | 10 | 8 | 2.31 | 440 | 100 | 100 |
| Ex.22 |  | 15 | 5 | 2.45 | 450 | 100 | 100 |
| Ex.23 |  | 15 | 8 | 2.86 | 500 | 100 | 100 |

Table 7

| | zirconium ion ratio | Al percentage content (wt%) | Si percentage content (wt%) | volume resistivity at 700°C (Ω·m) | | oxide semiconductor layer persistence (%) | |
|---|---|---|---|---|---|---|---|
| | | | | A/F= 12 | A/F= 16 | 0 h (initial) | 1000°C - 1000 h later |
| Ex.24 | | 0 | 0 | 1.43 | 350 | 75 | 50 |
| Ex.25 | | 0.01 | 0 | 1.57 | 350 | 95 | 90 |
| Ex.26 | | 1 | 0 | 1.64 | 380 | 100 | 100 |
| Ex.27 | | 3 | 0 | 1.80 | 400 | 100 | 100 |
| Ex.28 | | 5 | 0 | 1.88 | 410 | 100 | 100 |
| Ex.29 | | 10 | 0 | 1.95 | 440 | 100 | 100 |
| Ex.30 | | 15 | 0 | 2.45 | 540 | 100 | 100 |
| Ex.31 | | 0 | 0.01 | 1.60 | 350 | 95 | 95 |
| Ex.32 | | 0 | 1 | 1.68 | 420 | 100 | 100 |
| Ex.33 | 60% | 0 | 3 | 1.73 | 440 | 100 | 100 |
| Ex.34 | | 0 | 5 | 1.97 | 480 | 100 | 100 |
| Ex.35 | | 0 | 8 | 2.54 | 520 | 100 | 100 |
| Ex.36 | | 0.01 | 0.01 | 1.60 | 350 | 95 | 95 |
| Ex.37 | | 1 | 1 | 1.70 | 440 | 100 | 100 |
| Ex.38 | | 3 | 3 | 1.86 | 460 | 100 | 100 |
| Ex.39 | | 5 | 5 | 1.95 | 480 | 100 | 100 |
| Ex.40 | | 10 | 5 | 1.99 | 490 | 100 | 100 |
| Ex.41 | | 10 | 8 | 2.51 | 520 | 100 | 100 |
| Ex.42 | | 15 | 5 | 2.65 | 530 | 100 | 100 |
| Ex.43 | | 15 | 8 | 3.66 | 630 | 100 | 100 |

It can be seen from Table 6 and Table 7 that, when the Al content in the oxide semiconductor layer 3 is 0.01 wt% or more, adhesion between the substrate 2 and the oxide semiconductor layer 3 is improved and peeling of the oxide semiconductor layer 3 can be prevented. For example, a comparison between Example 4 and Example 5 in Table 6 and a comparison between Example 24 and Example 25 in Table 7 show that, when the Al content is 0.01 wt% or more, the persistence of the oxide semiconductor layer 3 becomes significantly higher than when the Al content is less than 0.01%. However, a comparison between Examples 5 to 9 and Example 10 in Table 6 and a comparison between Examples 25 to 29 and Example 30 in Table 7 show that, when the Al content exceeds 10 wt%, electrical conduction becomes more inhibited, thus resulting in an increased resistivity of the oxide semiconductor layer 3.

It can also be seen from Table 6 and Table 7 that, when the Si content in the oxide semiconductor layer 3 is 0.01 wt% or more, adhesion between the substrate 2 and the oxide semiconductor layer 3 is improved, and peeling of the oxide semiconductor layer 3 can be prevented. For example, a comparison between Example 4 and Example 11 in Table 6 and a comparison between Example 24 and Example 31 in Table 7 show that, when the Si content is 0.01 wt% or more, the persistence of the oxide semiconductor layer 3 becomes significantly higher than when the Si content is less than 0.01%. However, a comparison between Examples 11 to 14 and Example 15 in Table 6 and a comparison between Examples 31 to 34 and Example 35 in Table 7 show that, when the Si content exceeds 5 wt%, electrical conduction becomes more inhibited, thus resulting in an increased resistivity of the oxide semiconductor layer 3.

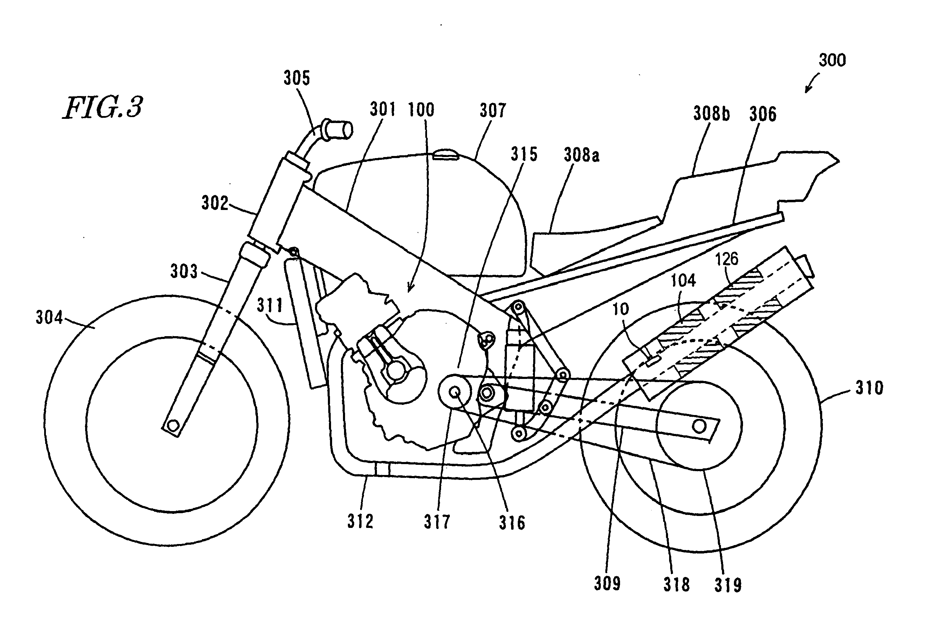

Next, a transportation apparatus which includes the oxygen sensor 10 according to the present preferred embodiment and which employs an internal combustion engine as a driving source will be described. FIG. 3 schematically shows a motorcycle 300 incorporating the oxygen sensor 10.

As shown in FIG. 3, the motorcycle 300 includes a body frame 301 and an engine (for example, an internal combustion engine) 100. A head pipe 302 is provided at the front end of the body frame 301. To the head pipe 302, a front fork 303 is attached to be capable of swinging in the right-left direction. At the lower end of the front fork 303, a front wheel 304 is supported so as to be capable of rotating. Handle bars 305 are attached to the upper end of the head pipe 302.

A seat rail 306 is attached at an upper portion of the rear end of the body frame 301 so as to extend in the rear direction. A fuel tank 307 is provided above the body frame 301, and a main seat 308a and a tandem seat 308b are provided on the seat rail 306. Moreover, rear arms 309 extending in the rear direction are attached to the rear end of the body frame 301. At the rear end of the rear arms 309, a rear wheel 310 is supported so as to be capable of rotating.

The engine 100 is held at the central portion of the body frame 301. A radiator 311 is provided in front of the engine 100. An exhaust pipe 312 is connected to an exhaust port of the engine 100. As will be specifically described below, an oxygen sensor 10, a ternary-type catalyst 104, and a muffler 126 are provided on the exhaust pipe (in an ascending order of distance from the engine 100). The top end of the oxygen sensor 10 is exposed in a passage within the exhaust pipe 312 in which exhaust gas travels. Thus, the oxygen sensor 10 detects oxygen within the exhaust gas. The oxygen sensor 10 has the heater 5 as shown in FIG. 1, etc., attached thereto. As the temperature of the gas detection section 1 including the oxide semiconductor layer 3 is elevated by the heater 5 at the start of the engine 100 (e.g., elevated to 700°C in 5 seconds), the detection sensitivity of the gas detection section 1 is enhanced.

A transmission 315 is linked to the engine 100. Driving sprockets 317 are attached on an output axis 316 of the transmission 315. The driving sprockets 317 are linked to rear wheel sprockets 319 of the rear wheel 310 via a chain 318.

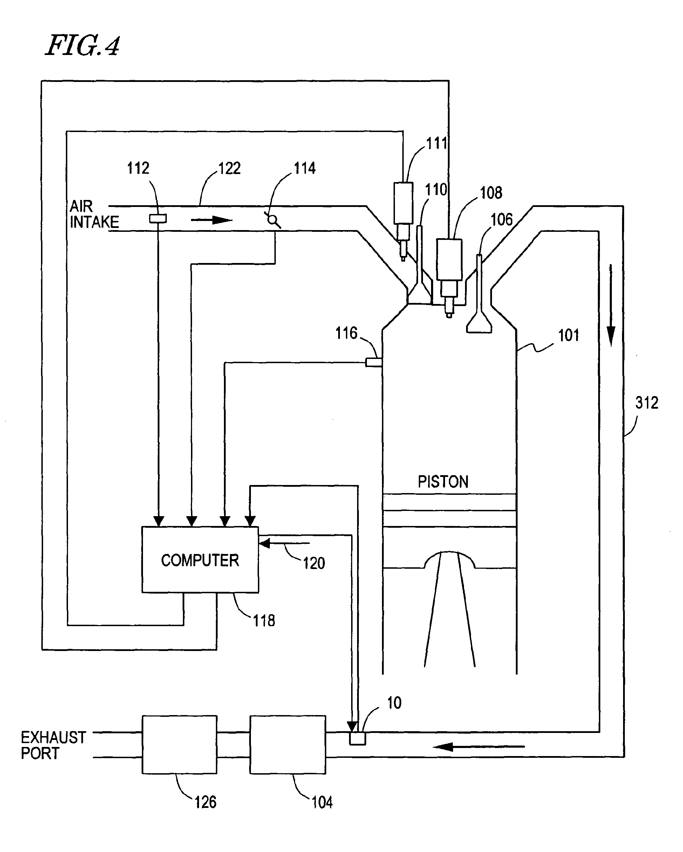

FIG. 4 shows main component elements of a control system of the engine 100. On a cylinder 101 of the engine 100, an intake valve 110, an exhaust valve 106, and a spark plug 108 are provided. There is also provided a water temperature sensor 116 for measuring the water temperature of the cooling water with which to cool the engine. The intake valve 110 is connected to an intake manifold 122, which has an air intake. On the intake manifold 122, an airflow meter 112, a throttle sensor 114 of a throttle valve, and a fuel injector 111 are provided.

The airflow meter 112, the throttle sensor 114, the fuel injector 111, the water temperature sensor 116, the spark plug 108, and the oxygen sensor 10 are connected to a computer 118, which serves as a control section. A vehicle velocity signal 120, which represents the velocity of the motorcycle 300, is also input to the computer 118.

When a rider starts the engine 100 by using a self-starting motor (not shown), the computer 118 calculates an optimum fuel amount based on detection signals obtained from the airflow meter 112, the throttle sensor 114 and the water temperature sensor 116, and the vehicle velocity signal 120. Based on the result of this calculation, the computer outputs a control signal to the fuel injector 111. The fuel which is injected from the fuel injector 111 is mixed with the air which is supplied from the intake manifold 122, and injected into the cylinder 101 via the intake valve 110, which is opened or closed with appropriate timing. The fuel which is injected in the cylinder 101 combusts to become exhaust gas, which is led to the exhaust pipe 312 via the exhaust valve 106.

The oxygen sensor 10 detects the oxygen in the exhaust gas, and outputs a detection signal to the computer 118. Based on the signal from the oxygen sensor 10, the computer 118 determines the amount of deviation of the air-fuel ratio from an ideal air-fuel ratio. Then, the amount of fuel which is injected from the fuel injector 111 is controlled so as to attain the ideal air-fuel ratio relative to the air amount which is known from the signals obtained from the airflow meter 112 and the throttle sensor 114. Thus, an air-fuel ratio controller which includes the oxygen sensor 10 and the computer (control section) 118 connected to the oxygen sensor 10 appropriately controls the air-fuel ratio of the internal combustion engine.

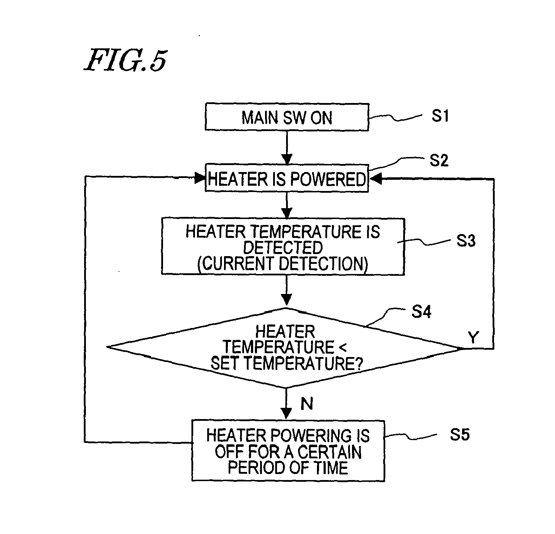

FIG. 5 shows a control flow for the heater 5 of the oxygen sensor 10. When the engine 100 is started and the main switch is placed in an ON state (step S1), the heater 5 begins to be powered (step S2). Next, the temperature of the heater 5 is detected (step S3), and it is determined whether the temperature of the heater 5 is lower than a set temperature or not (step S4). Detection of the temperature of the heater 5 can be performed by, utilizing the fact that the resistance value of the heater 5 changes depending on temperature, detecting the electric current which flows in the heater 5 (or the voltage which is applied to the heater 5). If the temperature of the heater 5 is lower than the set temperature, the heater 5 continues to be powered (step S2). On the other hand, if the temperature of the heater 5 is equal to or greater than the set temperature, powering of the heater 5 is stopped for a certain period of time (step S5), and after resuming powering of the heater 5 (step S2), the temperature of the heater 5 is detected (step S3). Through such a control flow, the temperature of the heater 5 is kept constant.

Since the motorcycle 300 includes the oxygen sensor 10, which is excellent in durability and response characteristics, the oxygen concentration within the exhaust gas and changes therein can be detected with good detection accuracy for long periods of time. This ensures that fuel and air are mixed at an appropriate air-fuel ratio, and allows fuel to combust under optimum conditions, whereby the concentration of regulated substances (e.g., $NO_x$) within the exhaust gas can be reduced. It is also possible to achieve improved fuel consumption.

Although a motorcycle has been illustrated for instance, the preferred embodiments of the present invention can also be suitably used for any other transportation apparatus, e.g., a four-wheeled automobile. Moreover, the internal combustion engine is not limited to a gasoline engine, but may alternatively be a diesel engine or other type of engine.

According to the preferred embodiments of the present invention, the durability and response characteristics of a resistance-type gas sensor having an oxide semiconductor layer can be improved. Since it has excellent durability and response characteristics, a gas sensor according to the preferred embodiments of the present invention is suitably used in an air-fuel ratio controller for various transportation apparatuses, e.g., a car, a bus, a truck, a motorbike, a tractor, an airplane, a motorboat, a vehicle for civil engineering use, or the like.

While the present invention has been described with respect to preferred embodiments thereof, it will be apparent to those skilled in the art that the disclosed invention may be modified in numerous ways and may assume many embodiments other than those specifically described above. Accordingly, it is intended by the appended claims to cover all modifications of the invention that fall within the true spirit and scope of the invention.

**Claims**

1.   A resistance gas sensor comprising:

a gas detection section including an oxide semiconductor layer; wherein
the oxide semiconductor layer includes cerium ions and zirconium ions;
an amount of substance of zirconium ions relative to a sum of amounts of substance of cerium ions and zirconium ions contained in the oxide semiconductor layer is no less than 45% and no more than 60%; and
the oxide semiconductor layer has a crystal phase containing 80 vol% or more of cubic crystals.

2.   The gas sensor of claim 1, wherein the oxide semiconductor layer contains no less than 0.01 wt% and no more than 10 wt% of Al.

3.   The gas sensor of claim 1 or 2, wherein the oxide semiconductor layer contains no less than 0.01 wt% and no more than 5 wt% of Si.

4.   A resistance gas sensor comprising:

a gas detection section including an oxide semiconductor layer; wherein
the oxide semiconductor layer includes cerium ions and zirconium ions; and
the oxide semiconductor layer further contains no less than 0.01 wt% and no more than 10 wt% of Al, and no less than 0.01 wt% and no more than 5 wt% of Si.

5.   The gas sensor of any of claims 1 to 4, wherein the gas sensor is an oxygen sensor.

6.   An air-fuel ratio controller comprising:

the gas sensor according to claim 5; and
a control section connected to the gas sensor arranged to control an air-fuel ratio of an internal combustion engine.

7.   A transportation apparatus comprising the air-fuel ratio controller of claim 6.

8.   A method of producing a resistance gas sensor having a gas detection section including an oxide semiconductor layer and a substrate supporting the gas detection section, the method comprising:

a step of providing a solution including cerium ions and zirconium ions;
a step of producing a ceria-zirconia powder containing no less than 45 mol% and no more than 60 mol% of zirconia from the solution, by using coprecipitation technique; and
a step of forming the oxide semiconductor layer on the substrate using the ceria-zirconia powder.

*FIG.1*

*FIG.2*

FIG.3

EP 2 037 267 A2

*FIG.4*

## FIG.5

```
          ┌─────────────────────┐        S1
          │     MAIN SW ON      │───┐
          └─────────────────────┘
                     │
                     ▼                     S2
     ┌──────►┌─────────────────────┐◄──────────┐
     │       │  HEATER IS POWERED  │           │
     │       └─────────────────────┘           │
     │                │                        │
     │                ▼                        │
     │     ┌─────────────────────┐             │
     │     │ HEATER TEMPERATURE IS│     S3     │
     │     │      DETECTED        │            │
     │     │  (CURRENT DETECTION) │            │
     │     └─────────────────────┘             │
     │                │                        │
     │                ▼           S4           │
     │            ◇─────────────────◇       Y  │
     │           HEATER                ───────►┘
     │        TEMPERATURE <
     │        SET TEMPERATURE?
     │            ◇─────────────────◇
     │                │ N
     │                ▼
     │     ┌─────────────────────┐     S5
     └─────│  HEATER POWERING IS │
           │  OFF FOR A CERTAIN  │
           │    PERIOD OF TIME   │
           └─────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003149189 A

- JP 3870261 B